# EUROPEAN PATENT APPLICATION

(11) **EP 4 029 418 A1**
(43) Date of publication of application: **20.07.2022**
(21) Application number: 20862598.8
(22) Date of filing: 02.09.2020
(51) Int. Cl.: A47J 43/07, A47J 43/08, A47J 43/046

(54) **COOKER**

(30) Priority: 11.09.2019 KR 20190112716
(71) Applicant: NUC Electronics Co., Ltd., 41548 (KR)
(72) Inventor: KIM, Jong Boo, Daegu 41573 (KR)
(74) Representative: Cabinet Beau de Loménie
(86) International application number: PCT/KR2020/011767
(87) International publication number: WO 2021/049809

(57) **Abstract**

Disclosed herein is a cooker. The cooker includes: a body including a motor and a control unit controlling the motor; a container coupled to the body, the container including a receiving chamber defining a space for receiving ingredients to be processed and a processing member disposed in the space and processing the ingredients in the space using power from the motor; an enclosure having a closed position in which the enclosure covers at least a portion of the receiving chamber and an open position resulting from movement of at least a portion of the enclosure from the closed position with respect to the receiving chamber; an enclosure actuator shifting the enclosure between the open position and the closed position; and a controller controlling the enclosure actuator based on a current state of the motor.

## Description

### [Technical Field]

Embodiments of the present disclosure relate to a cooker and, more particularly, to a cooker which performs processing of foods, such as chopping, mixing, and the like.

### [Background Art]

There are various kitchen appliances for chopping, mixing, or liquefying foods.

Such a kitchen appliance generally includes a container in which foods to be processed are placed and a processing member (for example, a blade, a screw, and the like) processing the foods in the container.

The kitchen appliance also includes a motor driving the processing member, and operation of the motor is normally accompanied by noise and vibration. In addition, collision of foods with the processing member or with an inner wall of the container during operation of the kitchen appliance can also generate noise and vibration.

Among these kitchen appliances, there is a blender provided with an enclosure adapted to block noise generated during operation of the blender.

### [Disclosure]

### [Technical Problem]

Embodiments of the present disclosure provide a cooker that includes an enclosure automatically shifted between open and closed positions.

It will be understood that aspects of the present disclosure are not limited to the above. The above and other aspects of the present disclosure will become apparent to those skilled in the art from the detailed description of the following embodiments.

### [Technical Solution]

In accordance with an aspect of the present disclosure, there is provided a cooker including: a body including a motor and a control unit controlling the motor; a container coupled to the body, the container including a receiving chamber defining a space for receiving ingredients to be processed and a processing member disposed in the space and processing the ingredients in the space using power from the motor; an enclosure having a closed position in which the enclosure covers at least a portion of the receiving chamber and an open position resulting from movement of at least a portion of the enclosure from the closed position with respect to the receiving chamber; an enclosure actuator shifting the enclosure between the open position and the closed position; and a controller controlling the enclosure actuator based on a current state of the motor.

When the motor stops operating, the controller may control the enclosure actuator to shift the enclosure from the closed position to the open position.

When the motor starts operating, the controller may control the enclosure actuator to shift the enclosure from the open position to the closed position.

The enclosure actuator may include an enclosure drive motor powered to actuate the enclosure.

The enclosure drive motor may be powered by the body.

The enclosure drive motor may be powered by a battery mounted on the enclosure or on the enclosure actuator.

The enclosure may include a lower enclosure supported on the container or the body and an upper enclosure pivotally mounted on the lower enclosure; and the enclosure drive motor may pivot the upper enclosure to shift the enclosure between the open position and the closed position.

The enclosure actuator may include a resilient member storing restoring force when the enclosure is shifted from the open position to the closed position and shifting the enclosure from the closed position to the open position using the stored restoring force and a locking portion allowing the enclosure to remain in the closed position; and the controller may control the locking portion to release the enclosure from the closed position.

The enclosure may include a lower enclosure supported on the container or the body and an upper enclosure pivotally mounted on the lower enclosure, the upper enclosure being moved with respect to the lower enclosure such that the enclosure is shifted between the open position and the closed position; and the resilient member may be disposed between the upper enclosure and the lower enclosure to store restoring force when the upper enclosure is moved from an enclosure opening position to an enclosure closing position and to move the upper enclosure from the enclosure closing position to the enclosure opening position using the stored restoring force.

The body may further include a timer to control an operating time of the motor; and the controller may control the enclosure actuator to shift the enclosure from the closed position to the open position in conjunction with the timer.

The body may further include an enclosure switch controlling the enclosure actuator to shift the enclosure from the closed position to the open position irrespective of the current state of the motor.

Other specific details of the present disclosure are set forth in the detailed description and accompanying drawings.

### [Advantageous Effects]

The embodiments of the present disclosure provide the following advantages.

User convenience is improved since the enclosure is automatically shifted between open and closed positions.

Since opening/closing of the enclosure is controlled based on a current state of the motor, a user can easily visually confirm whether processing of ingredients is finished or not.

It will be understood that advantageous effects of the present disclosure are not limited to the above, and the above and other advantageous effects of the present disclosure will become apparent to those skilled in the art from the detailed description of the following embodiments.

### [Description of Drawings]

FIG. 1 is a perspective view of a cooker according to a first embodiment of the present disclosure.
FIG. 2 is a perspective view of the cooker according to the first embodiment in which an enclosure is in an open position.
FIG. 3 is a block diagram illustrating enclosure operation control in cooker according to the first embodiment.
FIG. 4 is a block diagram illustrating enclosure operation control according to another embodiment.
FIG. 5 is a block diagram illustrating enclosure operation control according to a further embodiment.
FIG. 6 is an exploded perspective view of a cooker according to a second embodiment of the present disclosure.
FIG. 7 is a block diagram illustrating enclosure operation control in the cooker according to the second embodiment.

### [Best Mode]

The above and other aspects, features, and advantages of the present disclosure will become apparent from the detailed description of the following embodiments in conjunction with the accompanying drawings. It should be understood that the present disclosure is not limited to the following embodiments and may be embodied in different ways, and that the embodiments are provided for complete disclosure and thorough understanding of the present disclosure by those skilled in the art. The scope of the present disclosure is defined only by the claims. Like components will be denoted by like reference numerals throughout the specification.

In addition, embodiments disclosed herein will be described with reference to sectional views and/or schematic diagrams as ideal illustrative views of the present disclosure. Accordingly, such illustrative drawings may be modified due to manufacturing technology used and/or tolerance. In the drawings, the size or shape of components may be exaggerated for descriptive convenience and clarity only. It should be noted that like components will be denoted by like reference numerals throughout the specification.

Hereinafter, exemplary embodiments of the present disclosure will be described with reference to the accompanying drawings.

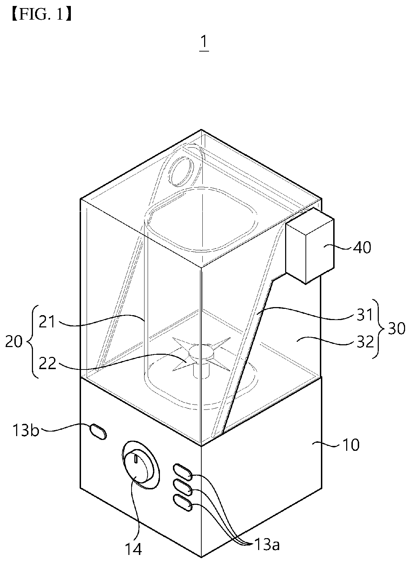

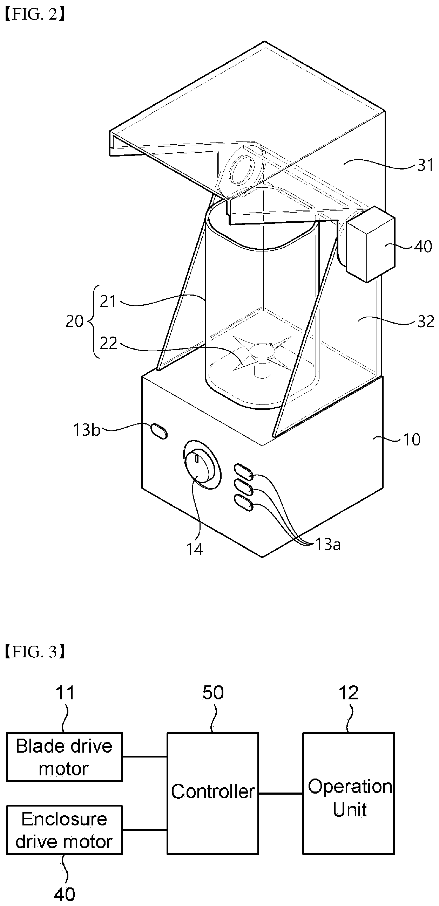

FIG. 1 is a perspective view of a cooker according to a first embodiment of the present disclosure and FIG. 2 is a perspective view of the cooker according to the first embodiment in which an enclosure is in an open position.

Referring to FIG. 1, the cooker 1 according to this embodiment includes a body 10, a container 20, an enclosure 30, and an enclosure actuator 40. Although the enclosure 30 is illustrated as including an upper enclosure 31 and a lower enclosure 32 in this embodiment, it should be understood that the present disclosure is not limited thereto and the enclosure may consist of a single body that is mounted on the body 10 to cover the container 20 in a different embodiment.

The body 10 may be provided therein with a motor 11 (see FIG. 3) and a controller 50 (see FIG. 3) controlling the motor 11 and the like. The motor 11 supplies power to a processing member 22 in the container 20.

The body 10 may be provided on a front surface and/or a side surface thereof with an operation unit 12 adapted to operate the cooker 1. Although the operation unit 12 is illustrated as including multiple operation buttons 13a, 13b adapted to select an operation mode of the cooker 1 and a dial 14 adapted to control a power output of the motor 11 in this embodiment, it should be understood that the present disclosure is not limited thereto and the operation unit may include an operation member such as a capacitive or pressure-sensitive touch display, an electrode switch, and the like, in a different embodiment. The operation unit 12 may be configured differently in different embodiments.

As shown in FIG. 1, the container 20 and the enclosure 30 may be mounted on an upper surface of the body 10. The container 20 and the enclosure 30 may be detachably mounted on the body 10. The body 10 may be formed on the upper surface thereof with a container coupling structure and an enclosure coupling structure to allow the container 20 and the enclosure 30 to be stably mounted on the upper surface.

The container 20 includes a receiving chamber 21 and a processing member 22.

The receiving chamber 21 forms an accommodation space for ingredients. The receiving chamber 21 is formed at a top thereof with an opening through which ingredients are introduced. Although not shown, the container 20 may further include a lid coupled to the receiving chamber 21 to open/close the opening formed at the top of the receiving chamber 21.

The processing member 22 may be disposed in the accommodation space of the receiving chamber 21 to process ingredients. The processing member 22 may be a blade chopping a processing target, such as foods. Although the processing member 22 will be described as a blade hereinafter, it should be understood that this is merely for convenience of description and the present disclosure is not limited thereto. The processing member 22 may be any other suitable tool apart from the blade in a different embodiment. In addition, although the cooker is illustrated as a blender that chops ingredients using a rotating blade in FIG. 1 and the like, it should be understood that the present disclosure is not limited thereto and may be applied to other cookers apart from the blender.

The blade 22 is rotatably mounted inside the receiving chamber 21. With the container 20 mounted on the body 10, a shaft of the blade 22 is connected to an output shaft of a blade drive motor to be rotated by torque transmitted from the blade drive motor 11.

A user may adjust rpm of the blade 22 by controlling a power output of the blade drive motor 11 using the dial.

The enclosure 30 may include an upper enclosure 31 and a lower enclosure 32.

The lower enclosure 32 may be detachably mounted on the upper surface of the body 10. When the lower enclosure 32 is mounted on the body 10, the lower enclosure 32 may cover the back and both sides of the container 20.

The upper enclosure 31 may be pivotally mounted on the lower enclosure 32 to be moved between an enclosure 30 closing position as shown in FIG. 1 and an enclosure 30 opening position shown in FIG. 2.

When in a closed position, the upper enclosure 31 may cover the top, front, and both sides of the container 20 and may adjoin the lower enclosure 32 at both sides of the container 20.

Accordingly, when in a closed position, the enclosure 30 may cover the top, front, back, and both sides of the container 20 to block noise from the container 20. In addition, when the enclosure 30 is in an open position, a space at the front of the container 20 is open such that a user can separate and remove the container 20 from the body 10.

Although the upper enclosure 31 is illustrated as being pivotally supported on the lower enclosure 32 in FIG. 1 and FIG. 2, it should be understood that the present disclosure is not limited thereto and the upper enclosure 31 is pivotally supported on a separate support member rather than on the lower enclosure 32. For example, the upper enclosure 31 may be pivotally mounted on a support member upwardly extending from the body 10.

The enclosure actuator 40 is configured to pivot the upper enclosure 31 to shift the enclosure 30 between the open position and the closed position.

As shown in FIG. 1, the enclosure actuator 40 may be mounted on a pivot of the upper enclosure 31. The enclosure actuator 40 may include an enclosure drive motor 40 that is powered to pivot the upper enclosure 31 in one direction/the other direction within a certain angle range.

The enclosure drive motor 40 may be powered by the body 10. In this configuration, a power line may be disposed through the lower enclosure 32 to connect the enclosure drive motor 40 to the body 10.

Alternatively, the enclosure drive motor 40 may be powered by a separate battery. In this configuration, the battery may be mounted on the upper enclosure 31 or the lower enclosure 32, or may be incorporated in the enclosure actuator 40.

Next, enclosure operation control in the cooker according to the first embodiment will be described.

FIG. 3 is a block diagram illustrating enclosure operation control in the cooker according to the first embodiment.

Referring to FIG. 3, the controller 50 of the body 10 may be communicatively connected to each of the operation unit 12, the blade drive motor 11, and the enclosure drive motor 40.

The controller 50 controls the blade drive motor 11 in response to a command input by a user via the operation unit 12. In addition, the controller 50 controls the enclosure drive motor 40 based on a current state of the blade drive motor 11.

More specifically, when the blade drive motor 11 stops operating, the controller 50 operates the enclosure drive motor 40 to move the upper enclosure 31 from the closed position to the open position.

That is, the cooker 1 according to this embodiment allows the enclosure 30 to be automatically shifted to the open position when the blade 22 finishes processing ingredients and stops rotating.

Accordingly, after processing of ingredients is finished, a user can instantly take out the container 20 from the body 10 without needing to raise the upper enclosure 31 personally since the upper enclosure 31 is automatically shifted to the open position.

In addition, even while doing something else, a user can easily notice that processing of ingredients has been finished by seeing that the upper enclosure 31 is open. This allows a user to easily confirm whether processing of ingredients is finished or not even in a noisy environment (for example, a restaurant, a cafe, and the like).

When the blade drive motor 11 starts operating, the controller 50 operates the enclosure drive motor 40 to move the upper enclosure 31 from the open position to the closed position.

Alternatively, in response to a user inputting a command to operate the blade drive motor 11 via the operation unit 12, the controller 50 may operate the enclosure drive motor 40 to move the upper enclosure 31 from the open position to the closed position before controlling the blade drive motor 11 to operate. In this way, it is possible to prevent leakage of noise generated during processing of ingredients to an outside environment.

That is, the cooker 1 according to this embodiment can automatically shift the enclosure 30 to the closed position at the same time as the blade 22 starts rotating or immediately before the blade 22 starts rotating.

Accordingly, after placing ingredients in the container 20, a user does not need to lower the upper enclosure 31 personally to shift the enclosure 30 to the closed position.

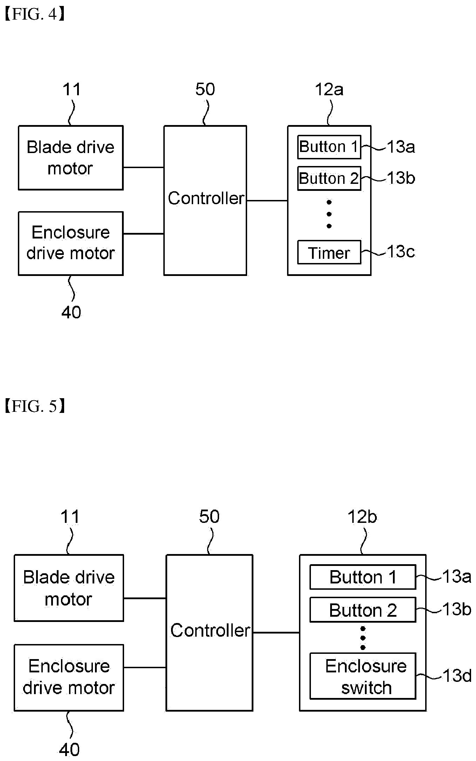

FIG. 4 is a block diagram illustrating enclosure operation control according to another embodiment.

According to this embodiment, the operation unit 12a of the body 10 may further include a timer 13c.

The timer 13c is configured to control an operating time of the blade drive motor 11. The controller 50 may control the enclosure drive motor 40 in conjunction with the timer 13c.

More specifically, when a user sets the amount of time the blade 22 rotates using the timer 13c, the controller 50 may control the blade drive motor 11 to operate until the timer 13c indicates zero. When the timer 13c reaches zero, the controller 50 may control the blade drive motor 11 to stop operating at the same time as operating the enclosure drive motor 40 to move the upper enclosure 31 from the closed position to the open position.

When a user sets the amount of time the blade 22 rotates using timer 13c with the blade drive motor 11 not in operation, the controller 50 may operate the blade drive motor 11 at the same time as operating the enclosure drive motor 40 to move the upper enclosure 31 from the open position to the closed position.

Alternatively, when a user sets the amount of time the blade 22 is rotated using a timer 13c with the blade drive motor 11 not in operation, the controller 50 may control the blade drive motor 11 to operate after operating the enclosure drive motor 40 to move the upper enclosure 31 from the open position to the closed position.

FIG. 5 is a block diagram illustrating enclosure operation control according to a further embodiment.

According to this embodiment, the operation unit 12b of the body 10 may further include an enclosure switch 13d.

The enclosure switch 13d is configured to control the enclosure drive motor 40. In response to a user inputting a command to open/close the enclosure via the enclosure switch 13d, the controller 50 may control the enclosure drive motor 40 to shift the enclosure 30 from the closed position to the open position irrespective of a current state of the blade drive motor 11.

There may be a case where a user needs to shift the enclosure 30 from the closed position to the open position even while the blade 22 is rotated.

In this case, a user can shift the enclosure 30 from the closed position to the open position using the enclosure switch 13d.

In addition, when a user wants to shift the enclosure 30 back to the closed position, the user can use the enclosure switch 13d to cause the controller 50 to control the enclosure drive motor 40 to shift the enclosure 30 from the open position to the closed position.

Accordingly, when there is a need to open the enclosure 30 during rotation of the blade 22 due to an urgent situation, a user can open the enclosure 30 using the enclosure switch 13d. When the situation is resolved, the user can close the enclosure 30 again using the enclosure switch 13d.

When a user operates the enclosure switch 13d, the controller 50 may control the blade drive motor 11 to keep operating. Accordingly, even when a user temporarily opens/closes the enclosure 30 due to an urgent situation, processing of ingredients can continue without interruption.

Next, a cooker according to a second embodiment of the present disclosure will be described. For convenience of description, like components will be denoted by like reference numerals and description of features shared with the first embodiment will be omitted.

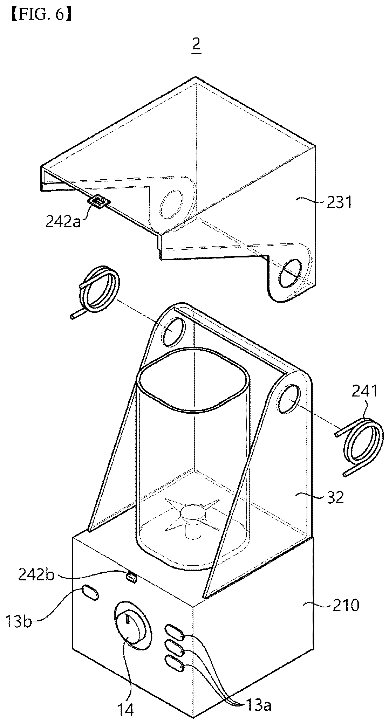

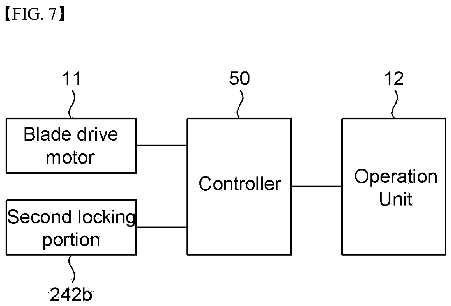

FIG. 6 is an exploded perspective view of the cooker according to the second embodiment and FIG. 7 is a block diagram illustrating enclosure operation control in the cooker according to the second embodiment.

The enclosure actuator 40 of the cooker 1 according to the first embodiment includes the enclosure drive motor 40, whereas an enclosure actuator of the cooker 2 according to the second embodiment includes a resilient member, a first locking portion 242a, and a second locking portion 242b.

The resilient member 241 is disposed on a pivot of an upper enclosure 231 and may be configured to: store restoring force when an upper enclosure 231 is moved from an open position to a closed position by a user applying pressure to the upper enclosure 231; and move the upper enclosure 231 from the closed position to the open position using the stored restoring force.

Although the resilient member 241 is illustrated as a torsion spring in FIG. 6, it should be understood that the present disclosure is not limited thereto and the resilient member 241 may be any type of resilient member that can store restoring force when the upper enclosure 231 is moved from the open position to the closed position and can move the upper enclosure 231 from the closed position to the open position using the stored restoring force.

Referring to FIG. 6, the resilient member 241 may be disposed between the upper enclosure 231 and the lower enclosure 32 at a portion at which the upper enclosure 231 and a lower enclosure 32 are pivotally connected to each other.

In another embodiment in which the upper enclosure 231 is pivotally supported on a separate support member rather than on the lower enclosure 32, the resilient member 241 may be disposed between the upper enclosure 231 and the support member.

The first locking portion 242a may be formed on the upper enclosure 231 and the second locking portion 242b may be formed on the body 210.

The first locking portion 242a and the second locking portion 242b are coupled to each other with the upper enclosure 231 in the closed position to prevent the upper enclosure 231 from being moved to the open position due to restoring force of the resilient member 241 so as to allow the upper enclosure 231 to remain in the closed position.

In this embodiment, the second locking portion 242b is configured to be movable up/down to be coupled to/decoupled from the first locking portion 242a. In order to ensure upward and downward movement of the second locking portion 242b, the second locking portion 242b may include a solenoid valve or the like.

Referring to FIG. 7, the controller 50 of the body 10 is communicatively connected to each of the operation unit 12, the blade drive motor 11, and the second locking portion 242b. That is, the controller 50 of the cooker 1 according to the first embodiment controls the enclosure drive motor 40, whereas the controller 50 of the cooker according to the second embodiment controls the second locking portion 242b.

In this embodiment, when the blade drive motor 11 stops operating, the controller 50 controls the second locking portion 242b to release the first locking portion 242a of the upper enclosure 231 therefrom. When the first locking portion 242a is released from the second locking portion 242b, the upper enclosure 31 is moved from the closed position to the open position by restoring force of the resilient member 241.

The cooker 2 according to this embodiment may also further include a timer 13c or an enclosure switch 13d as shown in FIG. 4 or FIG. 5. In response to a user operating the timer 13c or the enclosure switch 13d, the controller 50 may control the second locking portion 242b to release the first locking portion 242a of the upper enclosure 231 therefrom.

Although some embodiments have been described herein, it should be understood that various modifications, changes, and alterations can be made by those skilled in the art without departing from the spirit and scope of the invention. Therefore, it should be understood that these embodiments are provided for illustration only and are not to be construed in any way as limiting the present disclosure. The scope of the present disclosure is indicated by the following claims rather than by the detailed description and all changes or modifications derived from the meaning and scope of the claims and equivalents thereto should be construed as being within the scope of the present disclosure.

## Claims

1. A cooker comprising:
a body comprising a motor and a control unit controlling the motor;
a container coupled to the body, the container comprising a receiving chamber defining a space for receiving ingredients to be processed and a processing member disposed in the space and processing the ingredients in the space using power from the motor;
an enclosure having a closed position in which the enclosure covers at least a portion of the receiving chamber and an open position resulting from movement of at least a portion of the enclosure from the closed position with respect to the receiving chamber;
an enclosure actuator shifting the enclosure between the open position and the closed position; and
a controller controlling the enclosure actuator based on a current state of the motor.

2. The cooker according to claim 1, wherein, when the motor stops operating, the controller controls the enclosure actuator to shift the enclosure from the closed position to the open position.

3. The cooker according to claim 1, wherein, when the motor starts operating, the controller controls the enclosure actuator to shift the enclosure from the open position to the closed position.

4. The cooker according to claim 1, wherein the enclosure actuator comprises an enclosure drive motor powered to actuate the enclosure.

5. The cooker according to claim 4, wherein the enclosure drive motor is powered by the body.

6. The cooker according to claim 4, wherein the enclosure drive motor is powered by a battery mounted on the enclosure or on the enclosure actuator.

7. The cooker according to claim 4, wherein:
the enclosure comprises a lower enclosure supported on the container or the body and an upper enclosure pivotally mounted on the lower enclosure; and
the enclosure drive motor pivots the upper enclosure to shift the enclosure between the open position and the closed position.

8. The cooker according to claim 1, wherein:
the enclosure actuator comprises a resilient member storing restoring force when the enclosure is shifted from the open position to the closed position and shifting the enclosure from the closed position to the open position using the stored restoring force and a locking portion allowing the enclosure to remain in the closed position; and
the controller controls the locking portion to release the enclosure from the closed position.

9. The cooker according to claim 8, wherein:
the enclosure comprises a lower enclosure supported on the container or the body and an upper enclosure pivotally mounted on the lower enclosure, the upper enclosure being moved with respect to the lower enclosure such that the enclosure is shifted between the open position and the closed position; and
the resilient member is disposed between the upper enclosure and the lower enclosure to store restoring force when the upper enclosure is moved from an enclosure opening position to an enclosure closing position and to move the upper enclosure from the enclosure closing position to the enclosure opening position using the stored restoring force.

10. The cooker according to claim 1, wherein:
the body further comprises a timer to control an operating time of the motor; and
the controller controls the enclosure actuator to shift the enclosure from the closed position to the open position in conjunction with the timer.

11. The cooker according to claim 1, wherein the body further comprises an enclosure switch controlling the enclosure actuator to shift the enclosure from the closed position to the open position irrespective of the current state of the motor.
